# EUROPEAN PATENT APPLICATION

(11) **EP 2 362 300 A1**
(43) Date of publication of application: **31.08.2011**
(21) Application number: 11155019.0
(22) Date of filing: 18.02.2011
(51) Int. Cl.: G06F 3/041, G06F 3/048

(54) **Method and apparatus for collecting touch event on terminal**

(30) Priority: 19.02.2010 KR 20100015135
(71) Applicant: SAMSUNG ELECTRONICS CO., LTD., Suwon-si, Gyeonggi-do (KR)
(72) Inventor: Oh, Jun Suk, Gyeonggi-do (KR)
(74) Representative: Birchenough, Lewis

(57) **Abstract**

A method and apparatus for collecting a touch event of a terminal are provided. In the method, a touch panel is activated. An interrupt index is checked according to a given period of time, the interrupt index indicating at least one of a change in a coordinate or a change in a state of the touch event generated on the touch panel. Based on the interrupt index, it is determined whether to collect the touch event corresponding to the at least one of the change in the coordinate or the change in the state of the touch event.

## Description

### BACKGROUND OF THE INVENTION

### 1. Field of the Invention:

The present invention relates to a touch panel. More particularly, the present invention relates to a method and an apparatus for collecting a touch event on the touch panel of a terminal with enhanced efficiency with respect to a timing of collecting the touch event.

### 2. Description of the Related Art:

A mobile terminal is a terminal that supports various user functions for which mobility is appropriate and is widely used in various fields because of its convenience and portability. Such a mobile terminal provides various input methods to provide the user functions. A conventional mobile terminal typically includes a keypad that is mechanically positioned on one side of the mobile terminal to allow an input of characters or numbers. The mobile terminal should have a compact and limited size for portability reasons. To produce a small size mobile terminal, the keypad may be omitted in order to provide more space for a display unit, and a touch panel may be positioned on the display unit to support a touch screen.

The mobile terminal employing the touch screen described above supports an input by allowing a user to use various touch tools including his or her finger to touch the touch panel, thereby generating a touch event corresponding to the touch. The user may generate an input signal for operating the touch panel while activating a particular application program. In this case, the touch event generated in the touch panel should be processed such that an output of data by the activated application program is not delayed. Furthermore, generating and collecting the touch event may be a higher priority task in order to process a user input quickly. Therefore, in the above circumstances, a very heavy load may be placed on the controller and the system may not perform adequately.

### SUMMARY OF THE INVENTION

An aspect of the present invention is to address the above mentioned problems and/or disadvantages and to provide at least the advantages described below. Accordingly, an aspect of the present invention is to provide a method and an apparatus for collecting a touch event of a terminal having improved operational efficiency by collecting and processing the touch event at an appropriate time point, while achieving a fast activation of an application program and adequate touch event processing.

In accordance with an aspect of the present invention, a method of collecting a touch event of a terminal is provided. The method includes activating a touch panel, checking an interrupt index according to a given period of time, the interrupt index indicating at least one of a change in a coordinate and a change in a state of the touch event generated on the touch panel, and determining, based on the interrupt index, whether to collect the touch event corresponding to the at least one of the change in the coordinate and the change in the state of the touch event.

In accordance with another aspect of the present invention, an apparatus for collecting a touch event of a terminal is provided. The method includes a touch panel for generating the touch event in response to a touch input, an interrupt index indicating at least one of a change of a coordinate and a change of a state of the touch event generated on the touch panel, and a controller for collecting the touch event corresponding to the at least one of the change of the coordinate or the change of the state of the touch event based on the interrupt index.

In accordance with another aspect of the present invention, a method of processing input on a touch panel is provided. The method includes periodically checking an interrupt index indicating a generation of a touch event on the touch panel, the touch event indicating at least one of a change in a coordinate on the touch panel of the touch event or a change in state of the touch event, and determining, based on the content of the interrupt index, whether to collect the touch event.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a mobile terminal according to an exemplary embodiment of the present invention;

FIG. 2 illustrates a configuration of a controller according to an exemplary embodiment of the present invention;

FIG. 3 illustrates a timing of collecting a touch event according to an exemplary embodiment of the present invention; and

FIG. 4 is a flowchart diagram illustrating a method of collecting a touch event of a terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention is provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Although a mobile terminal is described herein as a typical example of a portable terminal according to exemplary embodiments of the present invention, it is not intended to limit the scope of the present invention to mobile terminals. Exemplary embodiments of the present invention may be applied to various other types of terminals that include a touch panel.

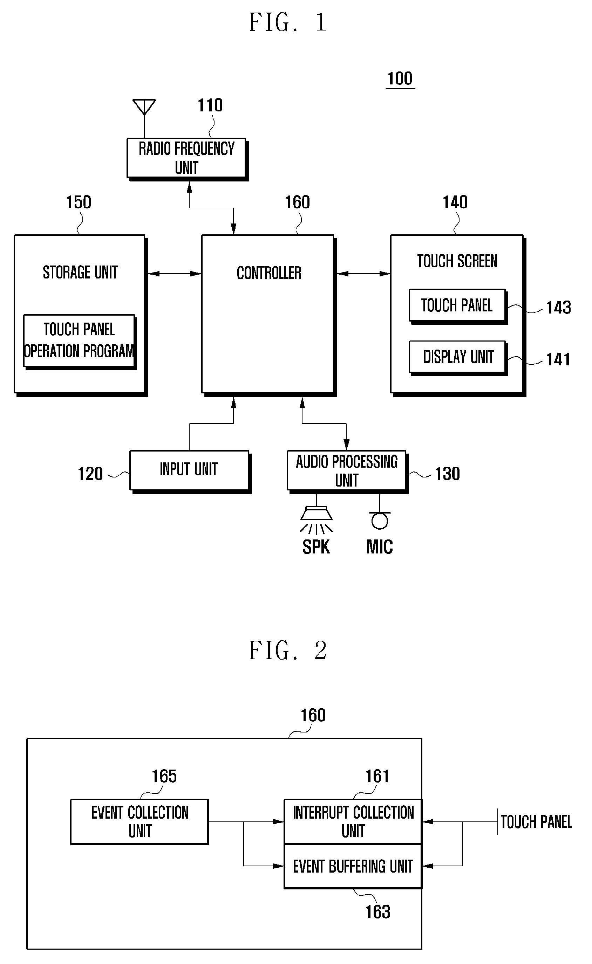

FIG. 1 is a block diagram illustrating a configuration of a mobile terminal according to an exemplary embodiment of the present invention.

Referring to FIG. 1, mobile terminal 100 includes a radio frequency unit 110, an input unit 120, an audio processing unit 130, a touch screen 140, a storage unit 150, and a controller 160.

When collecting a touch event generated on the touch panel 143 of the touch screen 140, the mobile terminal 100 collects the touch event according to a polling method, wherein an interrupt generated in response to a touch input of a user is used as a trigger. The mobile terminal 100 checks an interrupt index, for example, "an interrupt pin" or "an interrupt line" to determine whether the collected touch event has been changed during "a touch event change period," i.e., a time period between generation of the interrupt and generation of a release signal, which indicates a cancellation of the touch event. The touch event change period may correspond to an entire polling period of the mobile terminal 100. When the "interrupt pin" has a first state, for example, a "turn-on" state, an operation for collecting the touch event may be performed. When the "interrupt pin" has a second state, for example, a "turn-off" state, the mobile terminal 100 may be controlled to skip the operation for collecting the touch event. In this manner, the mobile terminal 100 may perform the operation for collecting the touch event when the touch event is actually generated, thereby saving process sequence and time by preventing unnecessary touch event collection. The mobile terminal 100 may improve system efficiency by allocating the saved process sequence or time for another application program.

The functions and features of respective elements described above will be further discussed in detail below. However, it should be noted that exemplary embodiments of the present invention are not limited to this configuration. Exemplary embodiments of the present invention may be applied to any other terminal which includes a touch panel with additional or fewer elements.

The radio frequency unit 110, under the control of the controller 160, forms a communication channel for a voice call or for transmission of images or pictures, or for data transmission. The radio frequency unit 110 forms a voice call channel, a data communication channel, and a video call channel between mobile communication systems. The radio frequency unit 110 may include a radio frequency transmitting unit, which performs an up conversion and amplification on a frequency of a signal to be transmitted, and a radio frequency receiving unit, which performs low noise amplification and a down conversion on a frequency of a received signal. Such configuration of the radio frequency unit 110 may be used when the mobile terminal 100 supports a mobile communication function. If the mobile terminal 100 does not support the mobile communication function, the elements described above may be omitted.

The mobile terminal 100 may output a keymap for operating the radio frequency unit 110, for example, an input of a phone number. A user inputs a particular phone number by using the corresponding keymap. The user may touch numbers included in the keymap, and in response, the mobile terminal 100 may generate an interrupt and collect a touch event using a polling method based on a touch operation of the user. For example, if the user touches the keymap to enter "010-9091-8155," the mobile terminal 100 collects the interrupt and the touch event being generated according to the polling method whenever a corresponding key in the keymap is pressed, and collects a type of the touch event and a coordinate of a touch location so that a corresponding operation may be performed based on the coordinate and the type of the touch event.

The input unit 120 may include a plurality of input keys and a plurality of function keys for receiving numeral or character information and performing various functions. The function keys may include an arrow key, a side key, a shortcut key, etc., that are designed to perform a particular function. When the mobile terminal 100 employs a full touch screen, the input unit 120 may not include a separate key button or keypad and may instead include only a side key positioned on one side of the touch screen 140 and a case of the mobile terminal 100 or a particular key positioned on an area outside of the touch screen 140. When the mobile terminal 100 employs the touch screen 140, the input unit 120 may be implemented in a keymap including a plurality of keys and the touch panel 143, which has a setting in accordance with the keymap. The keymap may include a QWERTY keymap, a 3*4 keymap, a 4*3 keymap, a menu map, a soft keymap, etc.

The audio processing unit 130 includes a speaker SPK for outputting an audio data received and transmitted during a call, audio data included in a received message, audio data resulting from reproducing an audio file stored in the storage unit 150, etc. The audio processing unit 130 also includes a microphone MIC for collecting a user's voice or various audio signals collected during the call. The audio processing unit 130 may output an audio signal that includes an alarm sound or announcement that is caused by the touch event on the touch panel 143. The controller 160 of the mobile terminal 100 may configure an audio path of the audio processing unit 130 such that, when a particular event occurs in the touch panel 143, the alarm sound or announcement is output in response to the particular event. An output of the alarm sound or the announcement may be omitted depending on user settings.

The touch screen 140 includes a display unit 141 and the touch panel 143. The touch screen 140 may have a configuration in which the touch panel 143 is positioned on an entire surface of the display unit 141. A size of the touch screen 140 may be determined according to a size of the touch panel 143. For example, the touch screen 140 may be provided as a full screen that is formed to cover the entire surface of the display unit 141.

The display unit 141 displays information such as a menu list of the mobile terminal 100, information received from the user, or information provided to the user. The display unit 141 may provide various screens according to usage of the mobile terminal 100 such as, a standby screen, a menu screen, a message drafting screen, and an incoming or outgoing call screen. The display unit 141 may be formed in a flat screen display device such as a Liquid Crystal Display (LCD) or an Organic Light Emitting Diode (OLED). When the display unit 141 is formed to provide the touch screen 140 in association with the touch panel 143, which may be positioned on an upper portion of the display unit, the display unit 141 may function as the input unit 120. For example, the display unit 141 may output the keymap described above and designate an area corresponding to the keymap as an effective area, under the control of the display unit 141. Accordingly, the touch screen 140 may support generation of an input signal corresponding to the keymap output on the display unit 141 based on a touch caused by the user on the touch panel 143.

The touch panel 143 generates the touch event in response to the user's touch on a given area of the touch panel 143 to select a particular image or item outputted on the display unit 141. For example, the touch panel 143 may determine an effective touch area that corresponds to the keymap or a particular icon outputted on the display unit 141. When the touch event is generated in the corresponding effective touch area, the touch panel 143 may transmit the generated touch event to the controller 160. An operation of the touch panel 143 will be further described in detail with the display unit 141 below.

The storage unit 150 may include an application program for performing a particular function according to an exemplary embodiment of the present invention. When the mobile terminal 100 is formed to include the touch screen, the storage unit 150 may further include the keymap for operating the touch screen 140. The keymap may include the menu map, the soft keymap, etc. The keymap and the menu map may have various forms. The keymap may be a keyboard map, the 3*4 keymap, the QWERTY keymap, or a control keymap for controlling an operation of the application program being currently activated. In addition, the menu map may be a menu map for controlling the operation of the application program being currently activated or a menu map having a list of various resources provided by the mobile terminal 100. The storage unit 150 may largely include a program area and a data area.

A variety of applications may be stored in the program area depending on the features available in the mobile terminal 100, such as an Operating System (OS) for booting the mobile terminal 100 and operating the above described elements, an application program for reproducing various files, for example, an application program for supporting a call function, a web browser for connecting to an internet server, an MP3 application program for reproducing various sound sources, an image outputting application program for reproducing pictures, and a video reproducing application program. According to an exemplary embodiment of the present invention, a touch panel operation program is stored in the program area.

The touch panel operation program is used to set up the touch panel 143 according to the map outputted to the display unit 141 and includes various routines for collecting touch events based on the set-up touch panel 143. The touch panel operation program includes a routine for gathering information of the touch effective area and a non-touch effective area of the map outputted on the display unit 141 and a touch event collection control routine for generating an interrupt signal in response to the touch input occurring in the touch effective area and controlling collection of the touch event using the polling method. The touch event collection control routine may include a sub-routine for checking an interrupt pin each polling period when the interrupt is generated, a sub-routine for collecting the touch event when the interrupt pin has the "turn-on" state, a sub-routine for controlling to skip collection of the touch event when the interrupt pin has the "turn-off" state, and a sub-routine for determining if the collected touch event includes the release signal, which indicates a touch release, and, in case the release signal is included, stopping the checking of the touch event using the polling method.

The data area is an area in which data produced according to the usage of the mobile terminal 100 is stored. For example, at least one icon according to phone book information, a widget function, and various content may be stored in the data area. In addition, the data area may store a user input that is received through the touch screen 140 when the display unit 141 is included in the touch screen 140. The touch event corresponding to the user input received through the touch screen 140 may be stored in a memory allocated to the display unit 141. Alternatively, a portion of the data area may be allocated for a buffer for buffering the touch event.

The controller 160 controls a power supply of each component of the mobile terminal 100 to perform an initialization process. When the initialization process is completed, an operation for collecting the touch event is performed according to an exemplary embodiment of the present invention. The controller 160 will be further described in detail with reference to FIG. 2.

FIG. 2 illustrates a configuration of the controller 160 according to an exemplary embodiment of the present invention.

Referring to FIG. 2, the controller 160 includes an interrupt collection unit 161, an event buffering unit 163 and an event collection unit 165.

The interrupt collection unit 161 collects information about an input signal corresponding to the touch input generated at a particular point of the touch panel 143 while power is supplied to the touch panel 143. For example, when the touch panel 143 is implemented as a capacitive touch panel, the interrupt collection unit 161 may identify changes in the capacity of the particular point of the touch panel 143 as being above or below a given value and determine the change as the touch input, thereby collecting the interrupt. When the touch panel 143 is implemented as a resistive touch panel, the interrupt collection unit 161 may identify rapid changes in resistance value at the particular point as the interrupt. When the interrupt is generated, the interrupt collection unit 161 may change the interrupt pin, which is allocated for indicating the generation of the interrupt, to the "turn-on" state.

When the interrupt is canceled, the interrupt collection unit 161 may change the state of the interrupt pin to the "turn-off" state. During this process, when the coordinate of the touch event and a touch pressure are not changed by a preset degree during a given time period, the interrupt collection unit 161 may determine this phenomenon as the interrupt being canceled and change the interrupt pin to the "turn-off" state. Accordingly, when the user touches the particular point of the touch panel 143 while a coordinate change or a release of a touch down event (i.e., the touch panel being released from the touch) does not occur, the interrupt collection unit 161 may change the interrupt pin to the "turn-off" state.

The event buffering unit 163 performs buffering of the touch event generated in the touch panel 143. For example, when the touch down event is generated, the event buffering unit 163 performs buffering of the touch down event transmitted from the touch panel 143. When a touch up event is generated, the event buffering unit 163 performs buffering of the touch up event transmitted from the touch panel 143. In addition, when a drag is generated after the touch down event, the event buffering unit 163 may perform buffering of a drag event in accordance with a change of the coordinate transmitted from the touch panel 143.

The event collection unit 165 collects the touch event stored in the event buffering unit 163 depending on the "turn-on" or "turn-off" state of the interrupt pin controlled by the interrupt collection unit 161. When the interrupt indicating beginning of the touch input on the touch panel 143 is generated, the event collection unit 165 checks the state of the interrupt pin that is set up by the interrupt collection unit 161 each period using the polling method. When the interrupt pin has the "turn-on" state, the event collection unit 165 collects the touch event stored in the buffering unit 163. When the interrupt pin has the "turn-off" state, the event collection unit 165 does not perform collection operations and skips the corresponding period.

As described above, the controller 160 performs a data read operation of the event buffering unit 163 to collect the touch event only when the touch event is actually expected to occur, thereby reducing unnecessary operation for touch event collection. Accordingly, it is possible to reduce a processing time allocated for collecting the touch event and the controller 160 may activate an application program as instructed by the user and output data generated by the activated application program to the display unit 141. Delay between processing and outputting of the data, which is caused due to the touch event collection, may therefore be reduced.

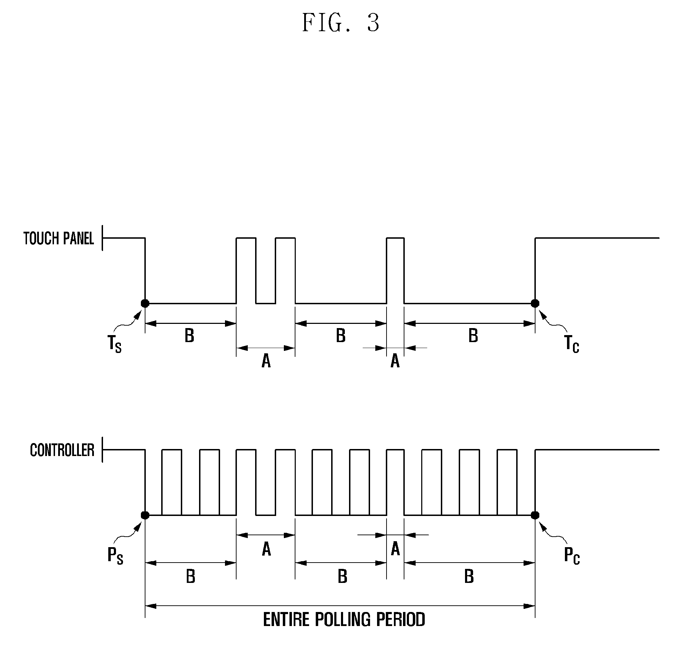

FIG. 3 is a timing diagram to illustrate an operation timing of the mobile terminal 100 in relation with a timing of collecting the touch event according to an exemplary embodiment of the present invention.

Referring to FIG. 3, the mobile terminal 100 supplies power to the touch panel 143 according to a user control, and sets up the touch panel 143 according to given information or the application program being currently activated. When the touch panel 143 is set up and the user begins the touch input at the particular area, for example, on the touch panel 143, by using various touch tools such as his or her finger or a stylus pen, the touch panel 143 may generate an interrupt in response to the touch to the interrupt collection unit 161 of the controller 160 at a time point Ts of the touch input. When the touch panel 143 is the capacitive touch panel, the capacity of the particular point being pressed may be a "down" level at the time point Ts of the touch input. The interrupt collection unit 161 of the controller 160 may register the interrupt handler to a "low" level, namely, a "turn-on" state according to the touch panel operation program that supports for touch input function. The interrupt collection unit 161 of the controller 160 may also set an interrupt call back function to "Null" at the touch input time point Ts. The purpose of this is to prevent the interrupt call back being continuously generated during constant input of the touch event. The controller 160 recognizes the touch input point Ts as a polling start point Ps and checks the state of the interrupt pin using the polling method.

It is possible that, after the touch input (i.e., touch down event) is generated, the coordinate of the touch down event or a touch down state on the touch panel 143 may not be changed. In this circumstance, the interrupt collection unit 161 maintains the interrupt pin at the "turn-off" state or the interrupt line at the "high" level during a period B when there is no change of touch event. The interrupt pin or the interrupt line is used to indicate no change of event and the state or level of the interrupt pin or the interrupt line mentioned above may be varied depending on the setting of the mobile terminal 100. For example, in a particular mobile terminal 100, the interrupt pin may be maintained at the "turn-on" state or the interrupt line is maintained at the "low" level during the period B when there is no change of event. The event collection unit 165 may collect no change of event under such circumstance and operate accordingly.

During the period B when no change of event exists, the event collection unit 165 of the controller 160 may periodically check the state of the interrupt pin or the interrupt line controlled by the interrupt collection unit 161 using the polling method. When the interrupt pin is maintained at the "turn-off" state, the event collection unit 165 may skip the checking of the event buffering unit 163.

When an event change occurs, the event collection unit 165 may collect the touch event stored in the event buffering unit 163. When a user who has not been causing any change of the coordinate or touch state after the touch input time point Ts performs a touch event that causes a change of the coordinate equal to or greater than a preset degree, the touch panel 143 generates and transmits the touch event according to the corresponding change of the coordinate to the event buffering unit 163. Alternatively, the touch panel 143 may transmit the touch down event to the event buffering unit 163 continuously or periodically during when the touch down state is maintained. When the touch event corresponding to the change of the coordinate is generated in the touch panel 143, the interrupt collection unit 161 changes the interrupt pin having the "turn-off" state to the "turn-on" state or the interrupt line having the "high" state to the "low" state.

The event collection unit 165 of the controller 160 checks the interrupt pin or the interrupt line set by the interrupt collection unit 161 using the polling method in a period A during when the event change occurs. If the state of the interrupt pin is changed to the "turn-on" state, the event collection unit 165 recognizes a change in the event and collects the touch event stored in the event buffering unit 163. The event collection unit 165 collects the touch event stored in the event buffering unit 163 during the period A, in which the event change occurs, out of the entire polling period.

The touch panel 143 may generate the event change (i.e., change of the touch state), particularly the touch up event, which cancels the touch down state at a touch terminating time point Tc and transmit the generated touch up event to the event buffering unit 163. The interrupt collection unit 161 recognizes the touch up event transmitted from the touch panel 143 as an event for changing the touch state, and changes the interrupt pin having the "turn-off" state to the "turn-on" state and the interrupt line having the "high" level to the "low" level. The event collection unit 165 checks the state of the interrupt pin or the interrupt line according to the polling period, and, when the interrupt pin or the interrupt line has the "turn-on" state or the "low" level, the event collection unit 165 collects the touch event stored in the event buffering unit 163.

During this process, when the collected touch event is the touch up event, the event collection unit 165 recognizes the corresponding touch up event as the release signal for canceling the touch event, and defines a corresponding time point as the polling termination time point Pc. The event collection unit 165 stops checking the touch event using the polling method at the polling termination time point Pc. The event collection unit 165 may stop checking the interrupt pin or the interrupt line at the polling termination time point Pc.

Exemplary embodiments of the present invention are described above with regard to the configuration and elements of the mobile terminal 100 for collecting the touch according to exemplary embodiments of the present invention. A method of operating the mobile terminal 100, which employs a method of collecting the touch event according to an exemplary embodiment of the present invention, is described below.

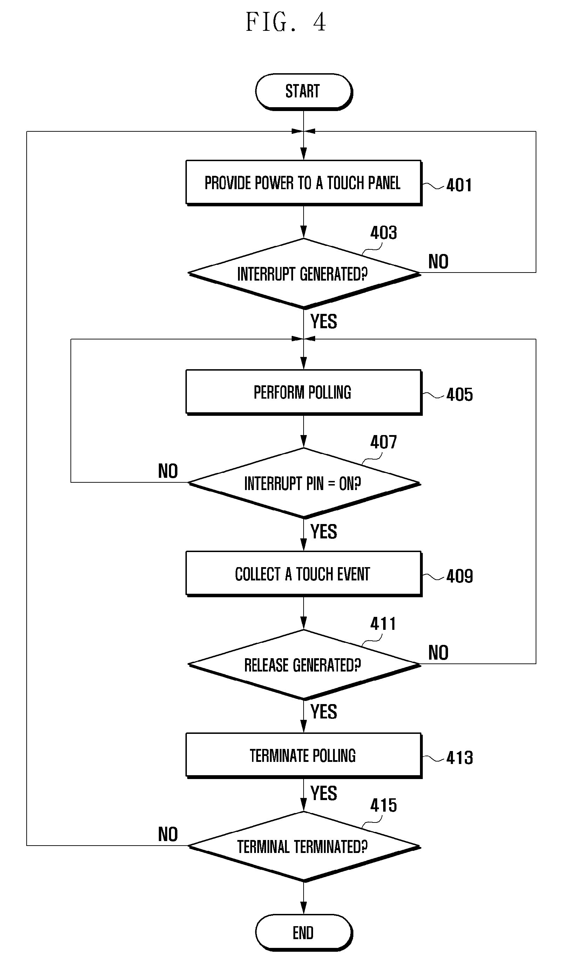

FIG. 4 is a flowchart diagram illustrating a method of collecting a touch event of a terminal according to an exemplary embodiment of the present invention

Referring to FIGs. 1 to 4, power is supplied to the mobile terminal 100 according to a user control. The mobile terminal 100 performs a booting operation using the supplied power. During this process, an initialization process of the touch panel 143 is performed while supplying the power to the touch panel in step 401. The initialization process of the touch panel 143 may include a process of providing the power to the touch panel 143, a process of setting a reference coordinate of the touch panel 143, etc. When information of determining a touch effective area is predefined, the initialization process of the touch panel 143 may include a process of setting the effective area and the non-effective area of the touch panel 143 based on the predefined information.

The controller 160 of the mobile terminal 100 may determine whether the interrupt is generated in step 403. The controller 160 may identify generation of the interrupt caused by a user operation on the touch panel 143, e.g., the touch input at a particular point of the touch panel 143. When no interrupt has been generated, the controller 160 proceeds to step 401 to continue to provide power to the touch panel 143 and perform the initialization process.

When the interrupt is generated at step 403, the controller 160 of the mobile terminal 100 performs polling for collecting the touch event periodically after the interrupt is generated in step 405. The controller 160 may not collect the touch event when performing the polling but instead checks the state of the interrupt pin or the interrupt line, which indicates the change in the coordinate or the touch state of the touch event being generated. The following description below will be presented with respect to the interrupt pin.

The controller 160 determines whether the interrupt pin has the first state, for example, the "turn-on" state, which indicates change in the coordinate or the state of the touch event in step 407. If the interrupt pin has the second state, for example, the "turn-off" state at step 407, the controller 160 proceeds to step 405 to perform the polling process.

If the interrupt pin has the "turn-on" state at step 407, the controller 160 collects the touch event stored in the event buffering unit 163 in step 409. After step S401, the touch panel 143 is activated to transmit the touch event corresponding to the user's touch input to the event buffering unit 163, continuously or periodically with a given period. Alternatively, when an identical touch event, for example, the touch down event, continues while there is no change in the coordinate, the touch panel 143, depending on the setting of the mobile terminal 100, may or may not periodically transmit the touch down event to the event buffering unit 163.

The controller 160 determines whether a signal corresponding to a 'Release' event is generated in step 411. The controller 160 fetches the touch event stored in the event buffering unit 163 and determines whether the corresponding touch event is the signal corresponding to the 'Release' event, for example, the touch up event that cancels the touch down state. If the collected touch event is not the signal corresponding to the 'Release' event, the controller 160 proceeds to step 405 to perform subsequent steps.

When the touch event corresponding to the 'Release' event is collected at step 411, the controller 160 terminates a process of collecting and collecting the touch event using the polling method, which is currently being performed in step 413. The controller 160 determines whether the terminal is terminated in step 415. When a separate input signal for terminating the terminal is not generated, the controller 160 may proceed to step 401 to repeat subsequent steps. The controller 160 may repeat the checking of the interrupt occurrence and, correspondingly, the checking and collection of the polling based touch event while the power is provided to the mobile terminal 100 and the touch panel 143.

As described above, in the method of collecting the touch event in the mobile terminal 100 according to an exemplary embodiment of the present invention, the interrupt index is checked to determine whether a touch event directed to the application program is generated, and if the corresponding interrupt index indicates the touch event, the mobile terminal 100 executes an actual process for touch event collection. It is therefore possible to process another application program during a period in which the touch event is not generated, thereby improving the system efficiency.

Although not discussed herein, or only briefly mentioned, the mobile terminal 100 may further include other elements to achieve additional functions, for example, a short-range communication module, a camera module for capturing still images/video of a subject, an interface for data transmission via a wired or wireless communication of the mobile terminal 100, an Internet communication module for providing internet services by communicating with an Internet network, and a digital broadcast module for receiving and reproducing digital broadcast data. With the convergence of digital devices, there may be many digital devices and modifications thereof, not listed herein, which may also be included in the mobile terminal 100. In addition, the mobile terminal 100 may be implemented by omitting a particular element or replacing a particular element with other elements.

Further, the mobile terminal 100 having the touch panel according to exemplary embodiments of the present invention may provide various communication services in line with different communication technologies. For example, the mobile terminal 100 may include all information technology devices, multimedia devices and their associated application devices, such as a Portable Multimedia Player (PMP), a digital broadcasting player, Personal Digital Assistant (PDA), a music reproducing device (for example, an MP3 player), a mobile game terminal, a smart phone, a tablet, and a handheld PC, including all mobile communication terminals operating based on communication protocols corresponding to various communication systems, just to name a few possibilities.

While the invention has been shown and described with reference to certain exemplary embodiments of the present invention thereof, it will be understood by those skilled in the art that various changes in form and details may be made therein without departing from the spirit and scope of the present invention as defined in the appended claims and their equivalents.

## Claims

1. A method of collecting a touch event of a terminal, the method comprising:
activating a touch panel;
checking an interrupt index according to a given period of time, the interrupt index indicating at least one of a change in a coordinate and a change in a state of the touch event generated on the touch panel; and
determining, based on the interrupt index, whether to collect the touch event corresponding to the at least one of the change in the coordinate and the change in the state of the touch event.

2. The method of claim 1, further comprising:
storing the touch event in a buffer.

3. The method of claim 2, wherein the determining of whether to collect the touch event comprises:
determining, when the interrupt index indicates a generation of the touch event, to collect the touch event stored in the buffer.

4. The method of claim 3, further comprising:
terminating the checking of the interrupt index when the collected touch event corresponds to a release signal that cancels a touch down event.

5. The method of claim 3, wherein the determining of whether to collect the touch event comprises:
determining, when the interrupt index does not indicate a generation of the touch event, not to check the buffer.

6. The method of claim 1, wherein the checking of the interrupt index comprises at least one of:
identifying one of a "turn-on" or "turn-off" state of an interrupt pin, which indicates a generation of the touch event; and
identifying one of a "low" or "high" state of an interrupt line, which indicates the generation of the touch event.

7. The method of claim 1, wherein the touch panel is operated according to a polling method, which checks whether the touch event is generated according to a given period.

8. An apparatus for collecting a touch event of a terminal, the apparatus comprising:
a touch panel for generating the touch event in response to a touch input;
an interrupt index for indicating at least one of a change of a coordinate and a change of a state of the touch event generated on the touch panel; and
a controller for collecting the touch event corresponding to the at least one of the change of the coordinate or the change of the state of the touch event based on the interrupt index.

9. The apparatus of claim 8, further comprising:
a buffer for storing the touch event.

10. The apparatus of claim 9, wherein the controller starts checking the interrupt index according to a given period when the touch input is generated on the touch panel, and checks the buffer and collects the touch event stored in the buffer when the interrupt index changes to a state indicating a generation of the touch event.

11. The apparatus of claim 10, wherein the controller terminates the checking of the interrupt index when the touch event collected through the checking of buffer includes a release signal indicating the discontinuance of the touch input.

12. The apparatus of claim 11, wherein the controller checks the interrupt index according to the given period when the touch input is generated on the touch panel, and skips checking the buffer when the interrupt index is changed to a state not indicating the generation of the touch event.

13. The apparatus of claim 8, wherein the interrupt index comprises at least one of:
an interrupt pin having a "turn-on" state in response to the generation of the touch event and a "turn-off" state when the touch event is not generated; and
an interrupt line having a "low" state in response to the generation of the touch event and a "high" state when the touch event is not generated.

14. The apparatus of claim 8, wherein the touch panel is operated according to a polling method, which determines whether the touch event is generated according to a given period.
